# EUROPEAN PATENT APPLICATION

(11) **EP 4 604 423 A1**
(43) Date of publication of application: **20.08.2025**
(21) Application number: 24157479.7
(22) Date of filing: 13.02.2024
(51) Int. Cl.: H04B 10/70

(54) **OPTICAL DETECTOR AND METHOD FOR QUANTUM COMMUNICATION**

(71) Applicant: Airbus S.A.S., 31700 Blagnac (FR)
(72) Inventor: Tepper, Jan, 82024 Taufkirchen (DE); Comin, Alberto, 82024 Taufkirchen (DE)
(74) Representative: OTN Airbus SAS

(57) **Abstract**

The present invention provides an optical detector (1) for quantum communication, comprising an optical setup (2) configured to separate a single-photon signal beam (3) encoded by a plurality of photon states into a plurality of separated single-photon beams (4a-4d) having mutually different photon states, and a camera (5) comprising a plurality of detection elements (6) arranged as a two-dimensional array forming a detection area (7), wherein each detection element (6) is configured to resolve a single photon being incident on the detection element (6) and provide a corresponding electric signal, wherein the camera (5) is arranged such that the separated beams (4a-4d) are incident on mutually different designated areas (8a-8d) of the detection area, wherein the designated area (8a-8d) comprises a plurality of detection elements (6). The present invention further provides a corresponding method for quantum communication.

## Description

### TECHNICAL FIELD OF THE INVENTION

The present invention relates to an optical detector and a method for quantum communication.

### TECHNICAL BACKGROUND

Typical QKD detectors are either fiber-based or discrete optics-based. In both cases, these detectors usually involve focusing the QKD photon beam either into a fiber or into the small area of a single-photon counter, such as an Avalanche Photo Diode (APD). When the optical beam traverses the atmosphere, its wavefront gets distorted so that it becomes challenging to focus the beam into a fiber or on such a QKD detector. Vibrations on the receiving platform may add further pointing instabilities. This may lead to a significant loss of efficiency, even when using expensive and complex mitigation techniques such as active tip-tilt correction and adaptive optics.

Furthermore, a QKD beam typically consists of single photons in the form of a single photon pulse stream and cannot be used directly as a reference for correcting its own wavefront since photons cannot be split. Therefore, in a typical approach, an additional beam is used as a reference having a different frequency, which reduces the accuracy of the wavefront compensation and increases the complexity of the system.

There is a need for an improved quantum optical receiver having a simpler structure.

### SUMMARY OF THE INVENTION

According to the invention, this problem is solved by the subject matter of the independent claims.

According to a first aspect of the invention, an optical detector for quantum communication is provided. The optical detector comprises an optical setup configured to separate a single-photon signal beam encoded by a plurality of photon states into a plurality of separated single-photon beams having mutually different photon states, and a camera comprising a plurality of detection elements arranged as a two-dimensional array forming a detection area, wherein each detection element is configured to resolve a single photon being incident on the detection element and provide a corresponding electric signal, wherein the camera is arranged such that the separated beams are incident on mutually different designated areas of the detection area, wherein the designated area comprises a plurality of detection elements.

According to a second aspect of the invention, a method for quantum communication is provided. The method comprises separating a single-photon signal beam encoded by a plurality of photon states into a plurality of separated single-photon beams having mutually different photon states, detecting by a camera the plurality of the Separated beams on mutually different designated areas of a detection area of the camera, wherein the camera comprises a plurality of detection elements arranged as a two-dimensional array forming the detection area, wherein each detection element is configured to resolve a single photon being incident on the detection element and provide a corresponding electric signal, wherein each of the designated areas comprises a plurality of detection elements.

A fundamental concept of the invention is to provide an optical detector, which is more resilient to mechanical vibrations and atmospheric turbulence, by reducing the need to focus the incoming single photon signal beam into a fiber or a small area photon counter. This is achieved by replacing single and small-sized photon-counters, which are typically Avalanche Photodiodes, by a single-photon sensitive camera. By mapping different photon quantum states onto different areas on the camera, multiplexing of these photon quantum states can be employed using a single camera. These areas are sufficiently large to take into account the wavefront distortions caused by the turbulences of the atmosphere, so that even by a strongly distorted wavefront, photons of different separated beams are confined in their corresponding designated area on the detection area of the camera, so that in particular no cross-talk is caused.

In this way, the present invention is especially suitable for enabling quantum communications in difficult scenarios, e.g. between fast movable platforms and in high atmospheric turbulence. By employing for example new generation Single-Photon Avalanche Diode (SPAD) cameras having frame rates of 100KHz, a fast quantum bit rate can be achieved. These advancements would make the camera-based QKD detector proposed in this invention a suitable option for future airborne and even ground-based quantum communication systems.

The particular advantages of the solution according to an aspect of the invention is a lower cost and complexity, since expensive adaptive optics setups are avoided.

Requirements for tracking and tip-tilt correction are strongly relieved and may not be necessary anymore. In this way, the optical detector can be made more compact, i.e. smaller and lighter. Such an optical detector also consumes less energy than a traditional detector. This makes the optical detector of the present invention especially suitable for airborne and spaceborne payloads since it is less sensitive to atmospheric turbulence and platform vibrations.

In the present invention, different photon states are detected by mapping photons of each different state onto different sections or areas of the detector area of the camera. The initial single-photon signal beam is understood to be a stream of single-photon pulses. In this scenario, the wavefront of the single-photon signal beam is distorted due to the propagation through turbulences, which cause refractive index variations of the propagated medium, usually some form of air. The separation of these photon pulses or photons is performed by the optical setup, more precisely, by optical components, which typically are commonly available. The photon quantum states can be any quantum state suitable for this task, such as, for example polarization, frequency/wavelength, time-bin or phase, as will be described further below.

According to some further aspects of the optical detector according to the invention, the signal beam is encoded by a polarization state of the single-photons. The plurality of separated beams each contain photons of the same polarization state. Polarization encoding of photons is the most common encoding technique in quantum communication, employing simple components. For such polarization encoding, the mapping may be realized using birefringent materials for the separation of the signal beam into separated beams each having the same polarization.

According to some further aspects of the optical detector according to the invention, the optical setup comprises at least one non-polarizing beam splitter and, arranged downstream the non-polarizing beam splitter, a waveplate and two polarizing beam splitters arranged to separate the signal beam into the separated beams having mutually different polarizations. The non-polarizing beam splitter divides the signal beam into two equal parts, reflecting or transmitting the single photons with equal probability. The two optical paths are equivalent except the waveplate arranged between the non-polarizing beam splitter and one of the polarizing beam splitters. The waveplate usually is a half-waveplate configured to rotate a linear polarized beam by 45°. These components are simple and readily available for a larger variety of wavelengths.

According to some further aspects of the optical detector according to the invention, the at least one polarizing beam splitter is configured as Wollaston prism. In this way, the photons get deflected in different directions depending on their polarization states. By the Wollaston polarizer, the beam can be effectively separated by deflecting a beam into two symmetrically opposite directions with respect to the original propagation direction.

According to some further aspects of the optical detector according to the invention, the two polarizing beam splitters are configured as a beam displacers. In this way, the alignment can be simplified in that the separated beams are parallel to each other so that these do not need to be collimated before being incident on the detection area.

According to some further aspects of the optical detector according to the invention, the optical setup further comprises a micro-lens array arranged between the polarizing beam splitters and the camera. The micro-lens array is arranged to focus each separated beam separately onto its corresponding designated area on the detection area of the camera. In this way, the optical setup can be made smaller and more compact. Compared to the same amount of single lenses, a micro-lens array is more stable with regard to misalignments due to vibrations and other environmental influences. A diameter of a lens on the micro-lens array is typically less than 1 mm and the focal length of such a micro-lens array typically is in the order of mm or less. In particular in combination with the aforementioned beam displacer, the micro-lens array can be arranged directly behind or attached to the beam displacer. In this way, a more compact and robust optical receiver can be implemented.

According to some further aspects of the optical detector according to the invention, the non-polarizing beam splitter is a meta-grating. The meta-grating may include nano-pillars, e.g. such as proposed by Zhang et al." large-size and polarization-independent two dimensional grating fabricated by scanned reactive-ion-beam etching", Nanophotonics, vol. 11, no. 21, 2022, pp. 4649-4657. In this way, the discrete optical components of the QKD detector are replaced with meta-surfaces, which leads to a further reduction in mass and volume of the optical detector.

According to some further aspects of the optical detector according to the invention, the two polarizing beam splitters include a polarizing meta-surface. The polarizing meta-surface may comprise nanofins, e.g. such as proposed by Li et al, "Transmissive mid-infrared achromatic bifocal metalens with polarization sensitivity", Optics Express Vol. 29, Issue 11, pp. 17173-17182 (2021). In this embodiment as well, the discrete optical components of the QKD detector with meta-surfaces, further reducing mass and volume of the detection system. The meta-surface may comprise nanofins for effective separation of different polarization states.

According to some further aspects of the optical detector according to the invention, the optical setup further comprises a Fresnel lens arranged between the polarizing beam splitters and the camera. Replacing conventional lenses by Fresnel lenses further reduces weight and volume of the optical detector. In combination with the meta-surfaces above, the optical receiver may be implemented as a chip-like system having a plurality of optical layers.

According to some further aspects of the optical detector according to the invention, the two polarizing beam splitters are configured as a combined monolithic element. Such monolithic elements can be fabricated by gluing or other suitable techniques. This leads to a more compact optical detector by further reducing the volume of the optical setup.

According to some further aspects of the optical detector according to the invention, the two polarizing beam splitters and the waveplate are configured as a combined monolithic element. In this way as well, the optical detector becomes more compact by further reducing the volume of the optical setup. The optical setup may made compact by also configuring the non-polarizing beam splitter, the waveplate and the two polarizing beam splitter as monolithic element, optionally including a mirror downstream the non-polarizing beam splitter. Ultimately, all optical components, which may include lenses for aligning the deflected beams after the polarizing beam splitter may by included to the monolithic element, thus providing a particularly compact and robust optical setup.

According to some further aspects of the optical detector according to the invention, the signal beam is encoded by optical orbital momentum, a time-bin, a frequency or a phase. The plurality of separated beams each contain the same respective photon state. This means that in case, a signal beam is encoded by optical orbital momentum, the signal beam is separated into a plurality of separated beams each containing photons having the same optical orbital momentum. In case, a signal beam is encoded by time-bin, the signal beam is separated by the optical setup into a plurality of separated beams each containing photons having the same time-of-arrival with respect to a reference time signal. In case, a signal beam is encoded by frequency, the signal beam is separated into a plurality of separated beams each containing photons having the same frequency or wavelength within a certain tolerance. In case, a signal beam is encoded by phase, the signal beam is separated into a plurality of separated beams each containing photons having the same phase with respect to a reference phase. In this way, the present invention is not limited to polarization encoding and can employ other encoding techniques as listed above. The optical components of the optical setup are selected accordingly. In this way, the flexibility of the optical detector is improved.

According to some further aspects of the optical detector according to the invention, the camera comprises a plurality of sub-cameras, wherein each sub-camera is arranged to detect at least one of the separated laser beams. In this way, larger detection area ca be provided. On the other hand, smaller sub-cameras with a smaller detection area may be employed, which potentially improves the speed of the camera in form of the frame rate, leading to a high maximum quantum bit rate.

According to some further aspects of the optical detector according to the invention, the size of the designated area is at least 1 mm² and comprises at least 10, in particular, 100 detection elements. This should ensure that a photon distorted by the atmosphere has a sufficient large area for detection, so that a strongly distorted signal may still be detected. Such a rather larger designated area enables a better detection efficiency.

The above aspects can be combined with each other as desired, if useful. In particular, where appropriate, all features of the optical detector and the optical detector are transferable to the method for quantum communication, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

### BRIEF SUMMARY OF THE DRAWINGS

The present invention is explained in more detail below with reference to the embodiments shown in the schematic figures:
- Fig. 1: a schematic illustration of an optical detector for quantum communication according to an embodiment of the invention;
- Fig. 2: a schematic illustration of an optical detector for quantum communication according to a further embodiment of the invention;
- Fig. 3: a schematic illustration of an optical detector for quantum communication according to a further embodiment of the invention;
- Fig. 4: a schematic illustration of an optical detector for quantum communication according to an embodiment of the invention;
- Fig. 5: a schematic illustration of an optical detector for quantum communication according to a further embodiment of the invention;
- Fig. 6: a schematic illustration of an optical detector for quantum communication according to a further embodiment of the invention;
- Fig. 7: a schematic illustration of an optical detector for quantum communication according to a further embodiment of the invention; and
- Fig. 8: a schematic illustration of a method for quantum communication according to an embodiment of the invention.

In the figures of the drawing, elements, features and components which are identical, functionally identical and of identical action are denoted in each case by the same reference designations unless stated otherwise.

### DESCRIPTION OF EXEMPLARY EMBODIMENTS

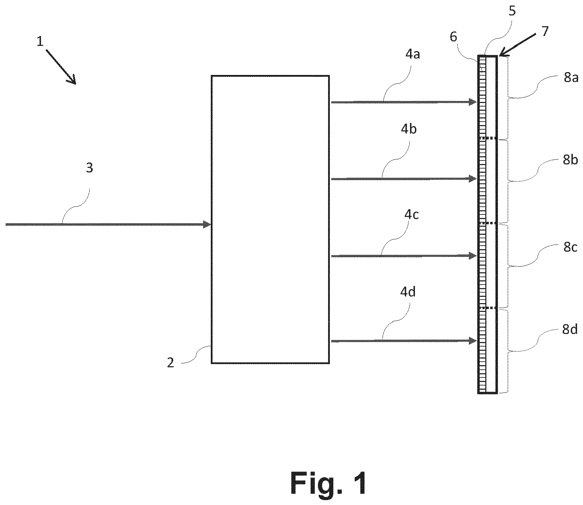

Fig. 1 shows a schematic illustration of an optical detector 1 for quantum communication according to an embodiment of the invention.

The optical detector 1 for quantum communication shown in Fig. 1 comprises an optical setup 2 configured to separate a single-photon signal beam 3 into a plurality of separated single-photon beams 4a-4d. The single-photon signal beam 3 is configured as a single-photon pulse stream and is encoded by a plurality of photon states. The separated single-photon beams 4a-4d are configured as single-photon streams. The separated single-photon beams 4a-4d have mutually different photon states.

The optical detector 1 further comprises a camera 5, which comprises a plurality of detection elements 6 arranged as a two-dimensional array forming a detection area 7. Each detection element 6 is configured to resolve a single photon being incident on the detection element 6 and provide a corresponding electric signal.

The detection elements 6 may comprise avalanche photo-diodes or similar sensitive components. The camera 5 may be a new generation Single-Photon Avalanche Diode SPAD cameras 5 having frame rates of 100KHz.

The camera 5 is arranged such that the separated beams 4a-4d are incident on mutually different designated areas 8a-8d of the detection area 7. This means that the first separated beam 4a is incident on the first designated area 8a, the second separated beam 4b is incident on the second designated area 8b, the third separated beam 4c is incident on the third designated area 8c, the fourth separated beam 4d is incident on the fourth designated area 4d. Each of the designated areas 8a-8d comprises a plurality of detection elements 6. The designated areas 8a-8d are large enough to confine each separated beam 4a-4d into its corresponding designated area 8a-8d so that despite the wavefront distortions experienced by the signal beam 3 no crosstalk between photons detected by the camera 5 in the different designated areas 8a-8d is occurring.

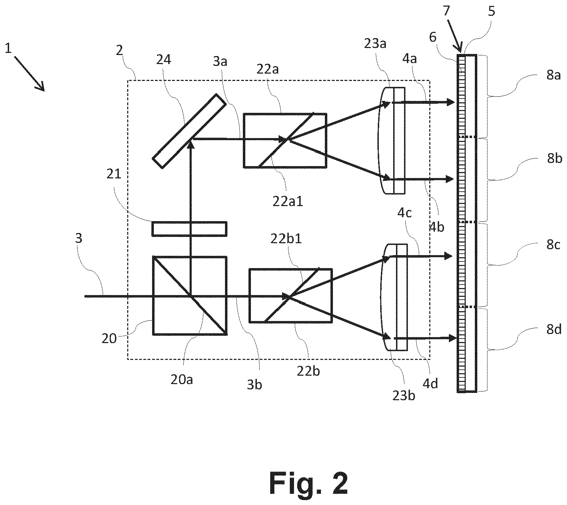

Fig. 2 shows a schematic illustration of an optical detector 1 for quantum communication according to a further embodiment of the invention.

The embodiment of the optical detector 1 Fig. 2 is based on the signal beam encoded by a polarization state of the single-photons, and wherein the plurality of separated beams each contain photons of the same polarization state.

The optical setup 2 further comprises at least one non-polarizing beam splitter 20. In this embodiment, the non-polarizing beam splitter 20 has a splitting plane 20a, which is orientated 45° inclined to a propagation direction of the signal beam 3 so that it separates the signal beam 3 into a first signal beam 3a and a second signal beam 3b. The optical setup 2 further includes a waveplate 21 arranged downstream the non-polarizing beam splitter 20. The waveplate typically is configured as a half-waveplate to rotate a linear polarization axis of the signal beam 3a for the detection of respective state, e.g. in a BB84 protocol. The optical setup 2 further includes two polarizing beam splitters 22a, 22b arranged downstream the non-polarizing beam splitter 20. The first polarizing beam splitter 22a is arranged downstream the waveplate 21. The two polarizing beam splitters 22a, 22b are arranged to separate the signal beam into the separated beams 4a-4d having mutually different polarizations.

In the present embodiment, the two polarizing beam splitters 22a, 22b are configured as Wollaston prisms. Such a Wollaston prism is at least partly made of birefringent material and includes a splitting plane 22a1, 22b1. The two polarizing beam splitters 22a, 22b are placed such that the splitting planes 22a1, 22b1 are inclined with respect to the incident first and second signal beams 3a, 3b. Thus, the first signal beam 3a is split by the first polarizing beam splitter 22a into a first and second separated beam 4a, 4b. The second signal beam 3b is split by the second polarizing beam splitter 22b into a third and fourth separated beam 4c, 4d. The first and second separated beams 4a, 4b and the third and fourth separated beams 4c, 4d are propagating along mutually different directions. In a preferred embodiment, the first polarizing beam splitter 22a discriminates between the +45 degree and -45 degree polarization states, and the second polarizing beam splitter 22b discriminates between the horizontal and vertical polarization states. For making the first to fourth separated beams parallel, two lenses 23a, 23b are placed between the polarizing beams splitters 22a, 22b and the camera 5 to focus the separated beams 4a-4d onto different designated areas 8a-8d on the detection area 7 of the camera 5.

This means that each separated beam 4a-4c is incident on a particular designated area 8a-8d, from which a respective electric signal can be detected. These designated areas 8a-8d are sufficiently large to take into account the wavefront distortions of the signal beam 3 caused by the turbulences of the atmosphere, so that even by a strongly distorted wavefront, photons of different separated beams 4a-4d are confined in their corresponding designated area 8a-8d on the detection area 7 of the camera 5. In some embodiments, a size of the designated area 8a-8d is at least 1 mm² and comprises at least 10, in some embodiments 100 and more, detection elements 6. This is considered as sufficient to also detect photons of a signal beam 3, whose wavefront has been distorted considerably by the atmosphere.

By these electric signals, the original encoded signal can be derived. Each separated beam thus carries information about a character of the encoded signal in the form of the respective photon state. In some embodiments, the signals are encoded in linear polarization states, such as 0°, 45°, 90° and 135°. It is acknowledged that the skilled person is familiar with other commonly used encoding techniques, such as E91 and the like, using the polarization state of the photon.

In some embodiments, the camera 5 comprises a plurality of sub-cameras (not shown), thus the detection area 7 is formed by a plurality of detection areas of the sub-camera. In these embodiments, each sub-camera is arranged to detect at least one of the separated laser beams 4a-4c.

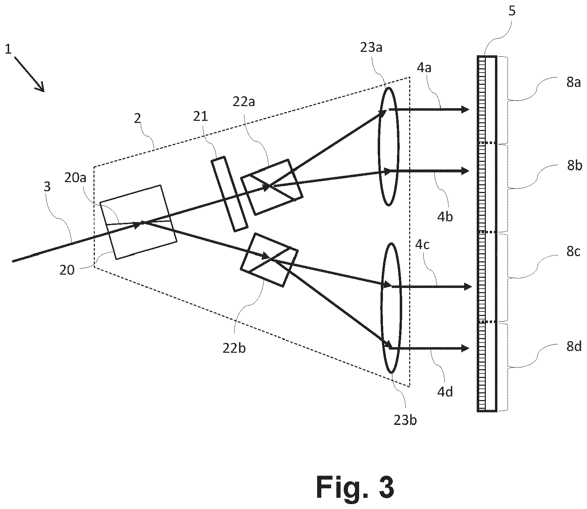

Fig. 3 shows a schematic illustration of an optical detector 1 for quantum communication according to a further embodiment of the invention;
The embodiment of the optical detector 1 shown in Fig. 3 is based on the previous embodiment of the optical detector 1 with reference to Fig. 2 and mainly differences are described here in detail. In the present embodiment of an optical detector 1 shown in Fig. 3, the non-polarizing beam splitter 20 is also configured as a tilted prism or non-polarizing beam splitter 20, so that the mirror 24 used in the optical setup 2 shown in Fig. 2 can be avoided.

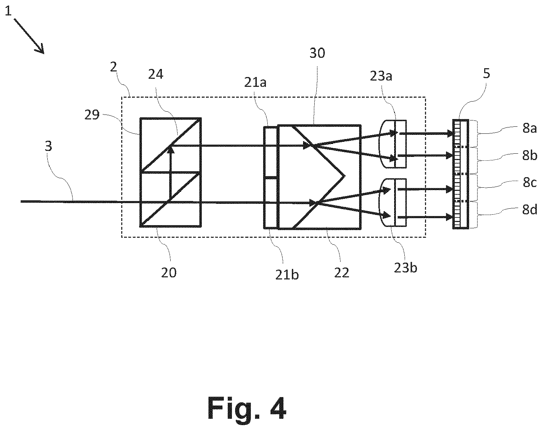

Fig. 4 shows a schematic illustration of an optical detector 1 for quantum communication according to an embodiment of the invention;
The embodiment of the optical detector 1 shown in Fig. 4 is based on the previous embodiments of the optical detector 1 with reference to Fig. 2 or 3 and mainly differences are described here in detail. However, in this embodiment, the two polarizing beam splitters 22a, 22b are configured as a single combined monolithic element 22. Furthermore, the two polarizing beam splitters 22a, 22b and the waveplates 21a, 21b, waveplate 21b arranged in the beam path of the undeflected second signal beam 3b, are configured as a combined monolithic element 30. The waveplates 21a, 21b, which can be a 45° rotating half-waveplate 21a, i.e. fast axis at 22.5°, and a 0° waveplate 21b, i.e. no change in polarization, may be also glued to the Wollaston polarizers 22a, 22b. In addition, The non-polarizing beam splitter 20 and the mirror 24 is grouped together into a monolithic component 29, which functions as a single non-polarizing beam-splitter 20, 29, where the two output beams are parallel to each other. In this configuration all the optical components of the optical setup 2 can be integrated into a small micro-optics bench, thus providing a particularly compact solution.

In this way as well, the optical detector 1 becomes more compact by further reducing the volume of the optical setup 2. The optical setup 2 may made compact by also configuring the non-polarizing beam splitter 20, the waveplates 21a, 21b and the two polarizing beam splitter 22a, 22b as monolithic elements 29, 30, optionally including the mirror 24 downstream the non-polarizing beam splitter 20. Ultimately, all optical components of the optical setup 2 , which may include lenses 23a, 23b for aligning the deflected beams after the polarizing beam splitter 22a, 22b may be included in a all-combined monolithic element, thus providing a particularly compact and robust optical setup 2.

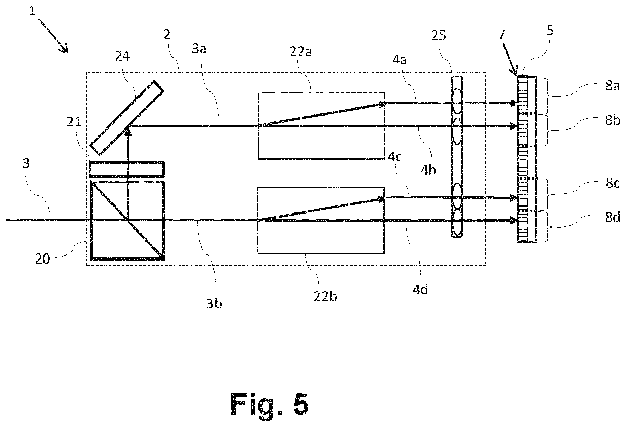

Fig. 5 shows a schematic illustration of an optical detector 1 for quantum communication according to a further embodiment of the invention;
The embodiment of the optical detector 1 shown in Fig. 5 is based on the previous embodiments of the optical detector 1 with reference to Fig. 2, 3 or 4 and mainly differences are described here in detail.

In this embodiment, the polarizing beam splitter 22a, 22b are configured as a beam displacer. In this case, the second and fourth separated beams 4b, 4d are not deflected by the polarizing beam splitters 22a, 22b and the first and second separated beams 4a, 4b, and the third and fourth separated beams 4c, 4d are exiting the respective polarizing beam splitters 22a, 22b in parallel. Such beam displacers are commercially available, e.g. Thorlabs item BD27 and BD40.

The optical setup 2 further comprises a micro-lens array 25 arranged between the polarizing beam splitters 22a, 22b. The micro-lens array 25 is meaningful here due to the parallel propagation of the separated beams 4a-4d to focus the separated beams 4a-4d onto the respective designated areas 8a-8d of the detection area 7 of the camera 5.

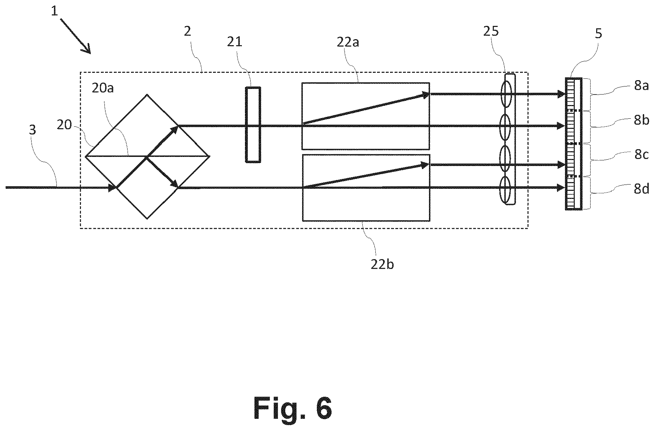

Fig. 6 shows a schematic illustration of an optical receiver for quantum communication according to a further embodiment of the invention;
The embodiment of the optical detector 1 shown in Fig. 5 is based on the previous embodiment of the optical detector 1 with reference to Fig. 5. In this embodiment as well, the polarizing beam splitters 22a, 22b are configured as a beam displacer. Furthermore, the optical setup 2 comprises a micro-lens array 25 arranged between the polarizing beam splitters 22a, 22b and the camera 5.

However, compared to the previous embodiment of Fig. 5, the non-polarizing beam splitter 20 is arranged such that its splitting plane 20a is parallel to the propagation direction of the signal beam 3, so that the split the first and second signal beams 3a, 3b exiting the non-polarizing beam splitter 20 are propagating in a parallel direction. In this way, the mirror 24 included in the previous embodiments of the optical setup 2 can be avoided, thus simplifying the optical setup 2.

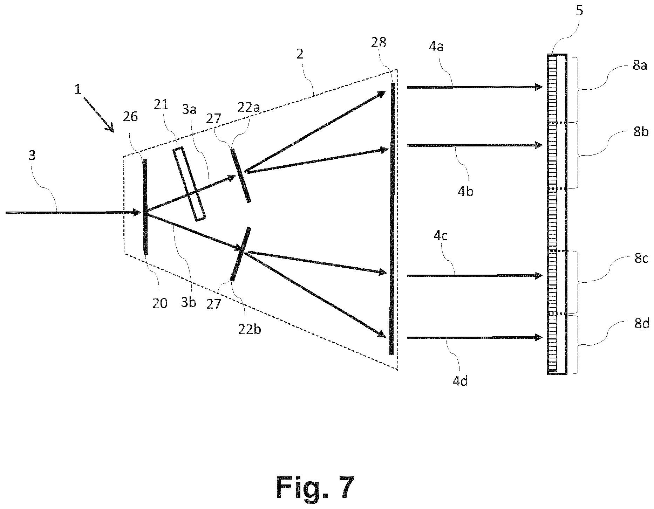

Fig. 7 shows a schematic illustration of an optical detector 1 for quantum communication according to a further embodiment of the invention.

The embodiment of the optical detector 1 shown in Fig. 7 is based on the previous embodiments of the optical detector 1 with reference to Fig. 2 to 6 and mainly differences are described here in detail.

In this embodiment, the non-polarizing beam splitter 20 includes a meta-grating 26. The first and second signal beams 3a, 3b are thus split from the signal beam 3 by diffraction at the meta-grating 26 into two separate directions. The meta-grating may include nano-pillars, e.g. such as proposed by Zhang et al." large-size and polarization-independent two dimensional grating fabricated by scanned reactive-ion-beam etching", Nanophotonics, vol. 11, no. 21, 2022, pp. 4649-4657. A suppression of the zero-order can be done by specially designing such metasurface and may requires tradeoffs with other optimization parameters. The following polarizing beam splitters 22a, 22b include a polarizing meta-surface 27. In some embodiments, the polarizing meta-surface 27 comprises nanofins, e.g. such as proposed by Li et al, "Transmissive mid-infrared achromatic bifocal metalens with polarization sensitivity", Optics Express Vol. 29, Issue 11, pp. 17173-17182 2021. Although this proposes designing bifocal metalens, where the focal length is polarization dependent, the same concept is applicable to realize polarization dependent beam splitters, which can direct different polarization states in different directions.

In this embodiment, the optical setup 2 further comprises a Fresnel lens 28 arranged between the polarizing beam splitters 22a, 22b and the camera 5, thus enabling a flat optical setup 2. In some embodiments, the optical setup 2 is attached or at least in contact with the camera 5, leading to a compact optical detector 1. Since this embodiment of the optical setup 2 of the optical detector 1 applies only flat optics, the components 20, 21, 22a, 22b, 28 may be arranged on-top of each other, thus providing a particularly compact solution.

In the embodiments of the optical detector 1 shown in Fig. 2 to 7 are applicable to single-photon signal beams 3, in which the polarization state of the photon is encoded by the information to be transmitted. However, it is appreciated that similar optical setups 2 with corresponding optical components can be applied for other encoding techniques. For example, in some embodiments, the signal beam 3 is encoded by optical orbital momentum, a time-bin, a frequency or a phase. The plurality of separated beams 4a-4d each contain the same respective photon state. This means that in case, a signal beam 3 is encoded by optical orbital momentum, the signal beam 3 is separated by the optical setup 2 into a plurality of separated beams 4a-4d each containing photons having the same optical orbital momentum. In case, a signal beam 3 is encoded by time-bin, the signal beam is separated by the optical setup 2 into a plurality of separated beams 4a-4d each containing photons having the same time-of-arrival with respect to a reference time signal. In case, a signal beam 3 is encoded by frequency, the signal beam 3 is separated by the optical setup 2 into a plurality of separated beams 4a-4d each containing photons having the same frequency or wavelength within a certain tolerance. In case, a signal beam 3 is encoded by phase, the signal beam 3 is separated into a plurality of separated beams 4a-4d each containing photons having the same phase with respect to a reference phase. In this way, the present invention is not limited to polarization encoding and can employ other encoding techniques as listed above. The optical components of the optical setup 2 are selected accordingly.

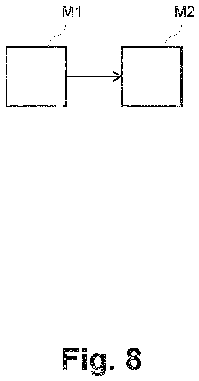

Fig. 8 shows a schematic illustration of a method for quantum communication according to an embodiment of the invention.

The method for quantum communication, in particular using the optical detector 1 of any of the precedent claims, comprising the following steps:
A single-photon signal beam 3 encoded by a plurality of photon is separated M1 states into a plurality of separated single-photon beams having mutually different photon states. Then, the plurality of the separated beams 4a-4d are detected M2 by a camera 5 on mutually different designated areas 8a-8d of a detection area 7 of the camera 5. The camera 5 comprises a plurality of detection elements 6 arranged as a two-dimensional array forming the detection area 7. Each detection element 6 is configured to resolve a single photon being incident on the detection element 6 and provide a corresponding electric signal, wherein each of the designated areas 8a-8d comprises a plurality of detection elements 6.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1: optical terminal
- 2: optical setup
- 3: single-photon signal beam
- 4a-4d: separated single-photon beams
- 5: camera
- 6: detection elements
- 7: detection area
- 8a-8d: designated areas
- 20: non-polarizing beam splitter
- 21, 21a, 21b: waveplate
- 22: monolithic element of two polarizing beam splitters
- 22a, 22b: beam splitter
- 22a1, 22b1: splitting plane
- 23a, 23b: lens
- 24: mirror
- 25: micro-lens array
- 26: meta-surface
- 27: meta-surface
- 28: Fresnel lens
- 29: monolithic element of non-polarizing beam splitter and mirror
- 30: monolithic element of polarizing beam splitters and waveplate
- M1-M3: method steps

## Claims

1. Optical detector (1) for quantum communication, comprising
an optical setup (2) configured to separate a single-photon signal beam (3) encoded by a plurality of photon states into a plurality of separated single-photon beams (4a-4d) having mutually different photon states, and
a camera (5) comprising a plurality of detection elements (6) arranged as a two-dimensional array forming a detection area (7), wherein each detection element (6) is configured to resolve a single photon being incident on the detection element (6) and provide a corresponding electric signal, wherein the camera (5) is arranged such that the separated beams (4a-4d) are incident on mutually different designated areas (8a-8d) of the detection area (7), wherein the designated area (8a-8d) comprises a plurality of detection elements (6).

2. Optical detector (1) according to claim 1, wherein the signal beam is encoded by a polarization state of the single-photons, and wherein the plurality of separated beams each contain photons of the same polarization state.

3. Optical detector (1) according to claim 2, wherein the optical setup (2) comprises at least one non-polarizing beam splitter (20) and, arranged downstream the non-polarizing beam splitter (20), a waveplate (21) and two polarizing beam splitters (22a, 22b) arranged to separate the signal beam into the separated beams (4a-4d) having mutually different polarizations.

4. Optical detector (1) according to claim 3, wherein at least one polarizing beam splitter (22a, 22b) is configured as Wollaston prisms.

5. Optical detector (1) according to claim 3 or 4, wherein the optical setup (2) further comprises a micro-lens array (25) arranged between the polarizing beam splitters (22a, 22b) and the camera (5).

6. Optical detector (1) according to any of claims 3 to 5, wherein the two polarizing beam splitters (22a, 22b) are configured as a beam displacer.

7. Optical detector (1) according to any of claims 3 to 6, wherein the non-polarizing beam splitter (20) includes a meta-grating (26).

8. Optical detector (1) according to any of claims 3 to 7, wherein the two polarizing beam splitters (22a, 22b) includes a polarizing meta-surface (28), the polarizing meta-surface (28) in particular comprising nanofins.

9. Optical detector (1) according to any of claims 3 to 8, wherein the optical setup (2) further comprises a Fresnel lens (28) arranged between the polarizing beam splitters (22a, 22b) and the camera (5).

10. Optical detector (1) according to any of claims 3 to 9, wherein the two polarizing beam splitters (22a, 22b) are configured as a combined monolithic element (22).

11. Optical detector (1) according to any of claims 3 to 10, wherein the two polarizing beam splitters (22a, 22b) and the waveplate (21) are configured as a combined monolithic element (22).

12. Optical detector (1) according to claim 1, wherein the signal beam (3) is encoded by optical orbital momentum, a time-bin, a frequency or a phase, and the plurality of separated beams each contain the same respective photon state.

13. Optical detector (1) according to any of the precedent claims wherein the camera (5) comprises a plurality of sub-cameras, wherein each sub-camera is arranged to detect at least one of the separated laser beams (4a-4c).

14. Optical detector (1) according to any of the precedent claims, wherein the size of the designated area (8a-8d) is at least 1 mm² and comprises at least 10, in particular, 100 detection elements.

15. Method for quantum communication, in particular using the optical detector (1) of any of the precedent claims, comprising
separating (M1) a single-photon signal beam (3) encoded by a plurality of photon states into a plurality of separated single-photon beams having mutually different photon states,
detecting (M2) by a camera (5) the plurality of the separated beams (4a-4d) on mutually different designated areas (8a-8d) of a detection area (7) of the camera (5),
wherein the camera (5) comprises a plurality of detection elements (6) arranged as a two-dimensional array forming the detection area (7), wherein each detection element (6) is configured to resolve a single photon being incident on the detection element (6) and provide a corresponding electric signal, wherein each of the designated areas (8a-8d) comprises a plurality of detection elements (6).
